Europäisches Patentamt

European Patent Office

Office européen des brevets

(11) Publication number: **0 113 977**
**A2**

(12) **EUROPEAN PATENT APPLICATION**

(21) Application number: **83307634.2**

(22) Date of filing: **15.12.83**

(51) Int. Cl.³: **G 03 B 27/32,** G 03 B 27/36

(30) Priority: **15.12.82 GB 8235662**

(43) Date of publication of application: **25.07.84**
**Bulletin 84/30**

(84) Designated Contracting States: **BE DE FR GB IT NL SE**

(71) Applicant: **Denner, James Railton, Avenue**
**House 26 Charlton Road, Shepton Mallet Somerset (GB)**

(72) Inventor: **Denner, James Railton, Avenue**
**House 26 Charlton Road, Shepton Mallet Somerset (GB)**

(74) Representative: **Armitage, Ian Michael et al, MEWBURN**
**ELLIS & CO. 2/3 Cursitor Street, London EC4A 1BQ (GB)**

(54) **Camera.**

(57) A graphic arts camera has a copyholder (22), a lens carriage (16) which can be raised an lowered by steel bands (30, 36) to alter the magnification, and a film-holder carriage (14) which is raised and lowered simultaneously to provide automatic focussing, by means of a crank (24) and connecting rod (26). By these means the camera can be adjusted between 300% and 33% magnification, and in the 100% magnification position the film-holder carriage (14) is in its lowest, most convenient position.

-1-

"CAMERA"

This invention relates to cameras for graphic arts work and offset print preparation.

The purpose of this application is to describe a number of novel aspects of such a camera, which can be applied separately or together.

The novel aspects will be exemplified in the following description, which refers to the accompanying diagrammatic drawings, wherein:-

Fig. 1 is a rear view of a camera, not all parts being shown,

Fig. 2 is a side view of the camera,

Fig. 3 is a plan view of the camera

Fig. 4 is a section on the line IV-IV in Fig. 3,

Fig. 5 shows a detector and motor control circuit,

Fig. 6 is a rear view corresponding to Fig. 1, but showing certain different parts of the camera,

Fig. 7 is a block diagram of exposure control circuits,

Fig. 8 is a perspective view of a tray for holding a box of film,

Figs. 9 and 10 are plan and sectional views of a lens supporting carriage,

Fig. 11 is a side view of an arrangement for moving lights, and

Figs. 12 and 13 are views on the lines XII-XII and XIII-XIII respectively in Fig. 11.

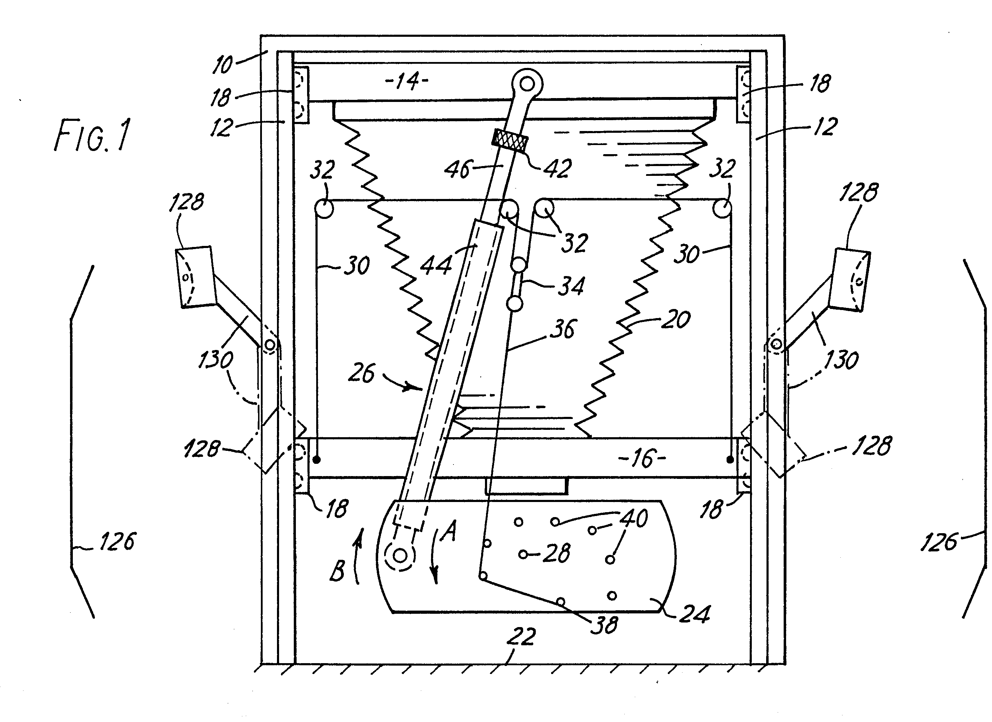

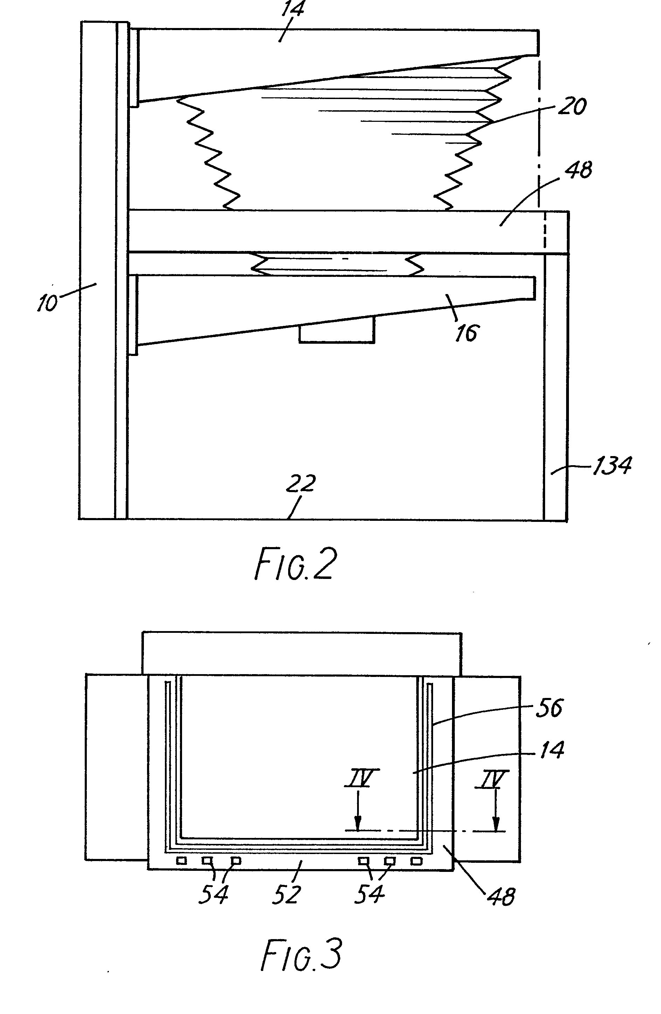

The general arrangement of the camera is seen in Figs. 1 to 3, many parts being omitted for clarity. It includes a rear frame 10 which has two mutually facing upright guide rails 12 at opposite sides. A film-holder carriage 14 and a lens-supporting carriage 16 are vertically slidable on the rails 12 by means of bearing blocks 18, and both carriages project forwards in cantilever fashion as seen in Fig. 2. The film-holder carriage 14 is mounted above the lens-supporting carriage 16, and a flexible bellows 20 extends between them in conventional fashion. At the base of the camera is a fixed copyholder table 22.

The film-holder carriage 14 and lens-supporting carriage 16 can be raised and lowered on the guide rails 12 to alter the degree of enlargement. The film-holder carriage is raised and lowered by means of a crank plate 24 and pivoted connecting rod 26. The crank plate 24 rotates about a bearing 28 under the action of a motor drive arrangement (not shown). Fig. 1 shows the film-holder carriage almost in its highest position; the highest position (corresponding to 300% magnification) is reached by turning the crank plate through 14° in the direction of arrow B. As the crank plate 24 turns in the opposite direction, shown by arrow A, the film-holder carriage 14 is lowered to a minimum position (bottom dead centre of the crank mechanism, corresponding to 100% enlargement, a "dot-for-dot" copying position where half-tone work is being undertaken) and then raised again. The crank plate 24 turns through a total of 208° as the film-holder carriage moves from its 300% position, down to 100%, and back up to a 33% enlargement position (i.e. reduction).

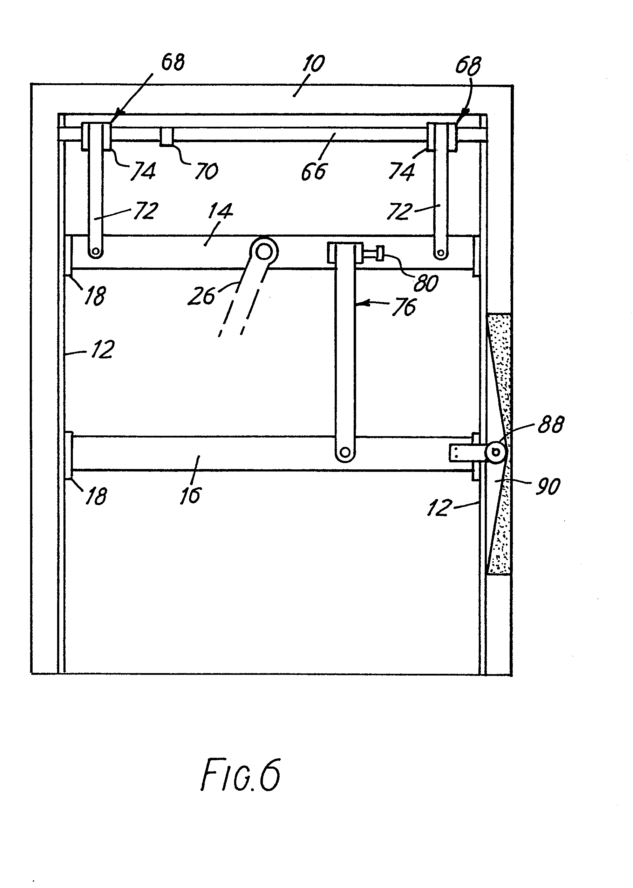

As this happens, the lens-supporting carriage 16 is gradually raised by steel bands 30 in the non-linear fashion required to ensure that correct focussing is always achieved. These bands 30 are connected to either side of the carriage 16, and pass over respective pulleys 32 to a connector 34 where they are both joined to a further steel band 36. The other end of the band 36 is secured to an anchor pin 38 on the crank plate 24, and as the crank plate rotates in the direction of arrow A, the band 36 wraps around a plurality of further pins 40 on the crank plate. The pins 40 are arranged so as together to form a cam surface, the profile of which gives the desired non-linearity to the rising of the lens-supporting carriage as the band 36 wraps further around it. To this end, the pins 40 may be adjustable for fine adjustment of the profile, in a similar manner to the corresponding pins in Fig. 5 of my patent application GB 2019020 . To further facilitate focus adjustment, the connector 34 has a screw adjustment so that the effective length of the bands 30,36 (and thus the initial height of the lens carriage 16) can be adjusted.

The crank connecting rod 26 is also of adjustable length, having a screw adjuster 42. This enables the initial height of the film-holder carriage 14 to be accurately set for correct focussing.

It will be appreciated that all the above focus adjustments will be made once only on manufacture or on installation of the camera. Subsequently, the degree of enlargement can be changed with automatic focussing simply using the motor drive arrangement for the crank

-4-

plate 24, as described later. It is thus easy and quick to set the camera to any position between 300% enlargement and 33% enlargement (i.e. reduction to one third size).

The connecting rod 26 is not a simple rod. It comprises a tube 44 pivotably connected to the crank plate 24, and an inner rod 46 which is pivotably connected to the film-holder carriage 14. The inner rod 46, which has the screw adjustor 42, rests inside. the tube 44 and is normally kept fully retracted therein by the weight of the carriage 14. In this manner, drive is transmitted to raise and lower carriage. (It should be noted that much of the weight of the carriage 14 is counterbalanced as described below, so that only a fraction of its weight keeps the rod 46 in the tube 44.) However, if the film-holder carriage 14 should jam for some reason as it is lowered, the rod 46 will lift within the tube 44 so that the motor does not try to force the carriage 14 lower. This obviously prevents strain on the motor, but a more important point is that if the reason for the jamming is that the operator has trapped his finger or hand under the film-holder, injury will be prevented.

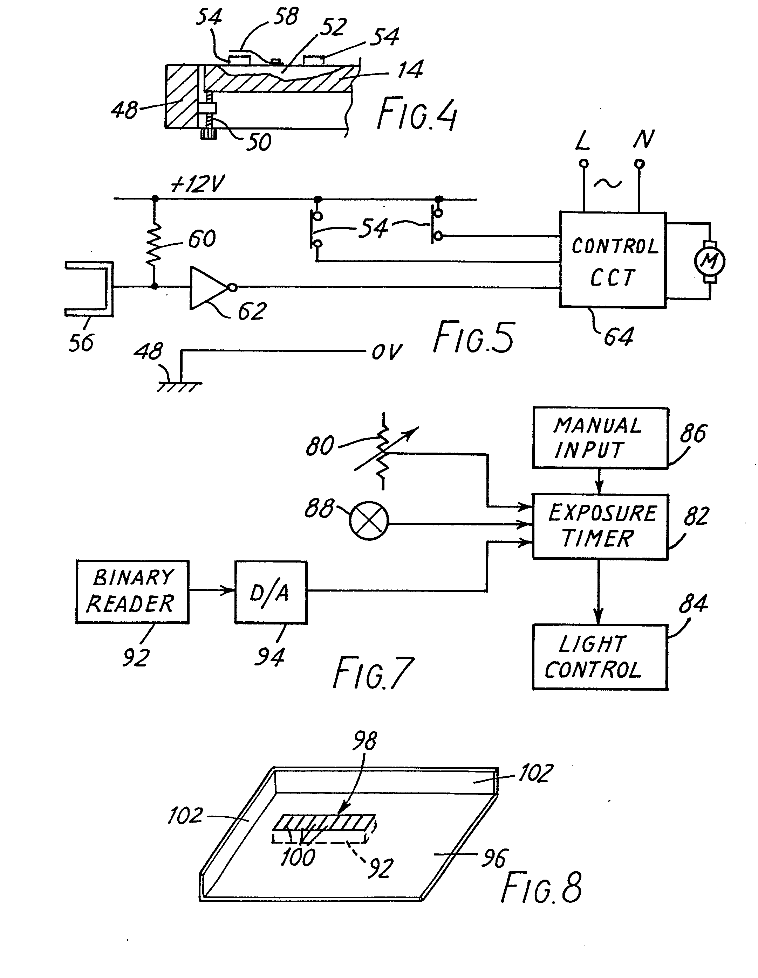

As can be seen particularly from Figs. 2 and 3, at its lowest, 100% enlargement position, the film-holding carriage 14 fits neatly within a horizontal rectangular frame 48. This is a very convenient position for

-5-

loading film or other photographic material into the film holder, since it is the lowest position and one which will most often be used during working. Furthermore, as seen in Fig. 4, within the horizontal frame 48, near the front at each side, there is mounted a respective micrometer stop screw 50, on which the film holder rests in this 100% enlargement position. The micrometer screws are adjusted so that the film holder is precisely horizontal in this position, and so that the focussing is exactly right, so that reliance is not placed entirely on the automatic focussing discussed above. The importance of this is that in the 100%, dot-for-dot position, correct focussing is at its most critical. With the use of these micrometer screws, slight inaccuracies in the automatic focussing, due perhaps to the cantilevered arrangement, can be removed. The film holder will in this position be held perfectly horizontal by a three-point support, comprising the connecting rod 26 and the two micrometer screws 50. Another possibility would be to provide one or more micrometer screws to support the carriage 14 at the rear when it is in the lowest, 100% position, in place of the connecting rod 26. However, this is less preferred since it implies a small amount of lost motion in the connecting rod 26 at this lowest position, which would lead to more inaccurate focussing in other positions.

The front part 52 of the horizontal frame 48 provides an ideal location for the most frequently used controls of the camera, including push buttons 54 for controlling the enlarging and reducing movements of the motor drive arrangement which raises and lowers the carriages 14, 16. To provide the operator with further protection against trapped fingers when the carriage 14 is lowered, a conductive strip 56 is provided on the top surface of the frame 48, around the inner periphery. This strip 56 is insulated from the frame, and is connected in a detector circuit shown in Fig. 5. In addition, those push buttons 54 which control the enlarging and reducing have positioned over them flexible, metal strips 58 (Fig. 4) which are earthed to the frame 48. The precise mechanical arrangement of these is not of especial importance, provided that the operator must touch them whenever he pushes the reducing or enlarging buttons, so that he is earthed.

Referring then to Fig. 5, which is a simplified circuit diagram of the reduce/enlarge controls, the conductive strip 56 is connected to a low voltage supply (+12V) through a high value resistor 60. A CMOS gate 62 acts as a detector, and if the strip 56 is earthed through the body of the operator, sends a signal to a control circuit 64 for the motor M which drives the crank plate 24. Push buttons 54 provide the enlarge and reduce controls, and normally act on the control circuit 64 whenever one of them is pressed to drive the motor in an appropriate direction. However, if a signal is received from the detector 62 while one of them is pressed, this immediately stops the motor. Since the operator must be earthed through one of the strips 58 whenever he is pressing one of the buttons 54, he will always activate the detector 62 if while the film holder 14 is moving he touches the strip 56, that is if he accidentally has his hand or finger at the inner periphery of the frame 48 where it is likely to be trapped by the moving film holder. The effect in such circumstances is to immediately stop the film holder movement and prevent injury.

An alternative to this arrangement is possible if the push buttons are to be mounted elsewhere. An earthed strip is provided on the underside of the film carriage, so that if the operator's fingers are trapped, they provide a conductive path from the strip 56 to the earthed strip, stopping the motor.

Obviously, any other kind of touch sensitive detector could be used to stop the motion. The control circuit 64 can suitably be made up of interlinked relays for driving the motor in the required direction in response to the buttons 54, and for stopping it in response to the detector 62. It may also contain limit switches to stop the motor at the maximum and minimum enlargements, and may also apply electrical braking to the motor when stopping it and reversing it.

Fig. 6 is another rear view of the camera, with

-8-

different components shown from those in Fig. 1.
Across the top of the frame 10, there is journalled a
torsion bar 66. On each of this there is fixed a
commercially available tensator 68, comprising a spring
steel band 72 wound onto a bobbin 74 secured to the
torsion bar. The free ends of the spring steel bands 72
support opposite sides of the film holder carriage 14.
The tendency of the spring steel bands to wind back onto
the bobbins provides the counterbalancing against most
of the weight of the carriage 14, referred to earlier.
Moreover, since most of the weight of the carriage 14
is supported at the sides in this way, and not by the
connecting rod 26 in the centre, the tendency of the
carriage to stray from the horizontal position and jam
against the rails 12 is greatly reduced. This
possibility is further reduced by the torsion bar 66,
which is provided with a torsion adjuster 70. This
enables the counterbalancing forces of the two tensators
68 to be equalised. The torsion adjuster 70 can be
omitted if the tensators are adjustably mounted on
the torsion bar. If needed to counterbalance the
weight, it is possible to use more than two tensators
68, e.g. to have two pairs of such tensators.

Also shown in Fig. 6 is a similar tensator 76
providing a counterbalance for the lens carriage 16.
This tensator is fixed between the film carriage 14 and
the lens carriage 16, and if more counterbalancing is

0113977

-9-

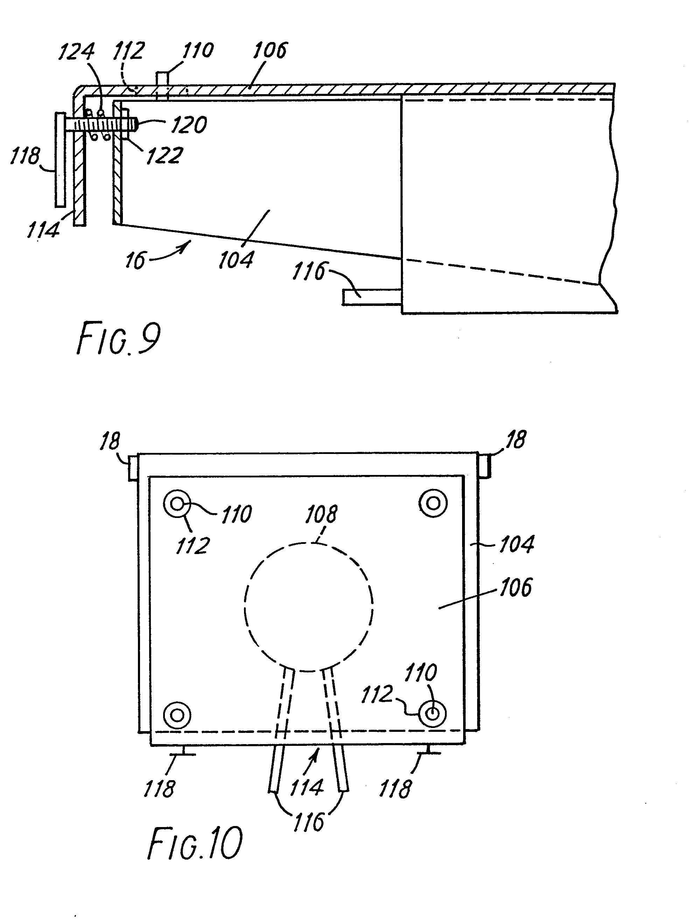

needed for the lens carriage 16, further tensators could be provided directly between the carriage 16 and the frame 10. The rotation of this tensator 76 acts on a multi-turn potentiometer 80, which is connected to an exposure control circuit shown in Fig. 7. In the latter figure, a generally conventional timer circuit 82 acts on a light control 84, to turn on the main camera lights for what would normally be a predetermined time. The timer can be controlled as desired from a manual input 86. However, the exposure time required naturally increases with the magnification, and we have found that measuring the position of the lens carriage 16 relative to the film carriage 14 (as the potentiometer 80 effectively does) gives a reasonably approximate indication of the variation of exposure time required. It is a simple matter to use the change in resistance of the potentiometer to control the exposure timer 82 to give an appropriate increase or decrease on the predetermined exposure time which would be required for the 100% magnification position.

Although this gives useful results, these are some non-linearities associated with the relationship between the movement of the lens carriage 16 and the required exposure time, and it may even be necessary to compensate for non-linearities in the potentiometer 80 itself. As shown in Fig. 6, an infra-red photocell 88 and infra-red source (not indicated) are attached to the lens carriage

-10-

16, and co-operate with a vertically arranged scale 90, on the frame 10. When the lens carriage is at the 100% magnification position, the photocell is adjacent a completely white central part of the scale 90, and is at a minimum resistance. As the magnification reduces or increases the photocell detects a gradually darker part of the scale above or below the central part and its resistance increases. This information is fed into the timer circuit 82 as a correction factor to the information from the potentiometer 80. In fact, provided the resistances of the potentiometer 80 and photocell 88 are appropriately selected, a simple arrangement is possible in which these components are simply arranged in series and give a single combined resistance value to the timer 82, indicative of the exposure required.

Provided the photocell 88 "sees" a sufficiently broad area of the scale 90, the darkening effect at the lower and higher magnifications can be produced by providing a black stripe on a white background, the thickness of which increases away from the central region, as shown in Fig. 6. Alternatively the scale 90 could be a photographically reproduced or printed grey scale, white in the centre and getting gradually darker towards the upper and lower ends.

-11-

The precise exposure adjustment provided by these arrangements can be trimmed by preset potentiometers in the timer circuit 82, and/or by adjusting the relative darknesses of the various parts of the scale 90.

If desired, a second multi-turn potentiometer may be provided, in tandem with the potentiometer 80. A variable voltage developed across this second potentiometer may be measured by a suitably calibrated meter, arranged to give an indication of the magnification setting of the camera. The second potentiometer may have its own trimming preset potentiometers to improve its accuracy.

The tensator 76 can of course be replaced by equivalent arrangements to provide counterbalancing. For example, a rotatable drum may be mounted on the film carriage, with a wire wrapped around it for say 20 turns, the wire being secured to the drum at its midpoint. One end of the wire is then attached to the lens carriage, while the other is attached to a suitable counterbalance weight. The multiturn potentiometers can be driven by the rotation of the drum.

As a further refinement of the exposure control, the camera may have a tray 96 as shown in Fig. 8 for receiving a box of film to be exposed. The tray 96 has

-12-

a window 98 behind which are a row of, say, eight infra-red photosensors 100 forming a binary reader 92. On the base of each box of film used, there is stuck a self-adhesive strip of paper bearing black and white squares, giving the film speed in a binary coded form. The strip of coded paper is stuck on the box so as to register with the photosensors 100 of the binary reader 92, assisted by the positioning given by the back and side walls 102 of the tray 98 (there being no walls at the front or the opposite side). The binary reader may have one or more separate sensors which co-operate with a separately coded part of the strip of paper to indicate correct registration; and in any case, the black and white squares I am proposing can be relatively large to obviate the effects of slight misregistration. The output from the binary reader 92, indicating the film speed, is fed to the exposure timer 82 e.g. through a suitable digital-to-analogue converter 94, and is used to alter the exposure time in accordance with the film speed.

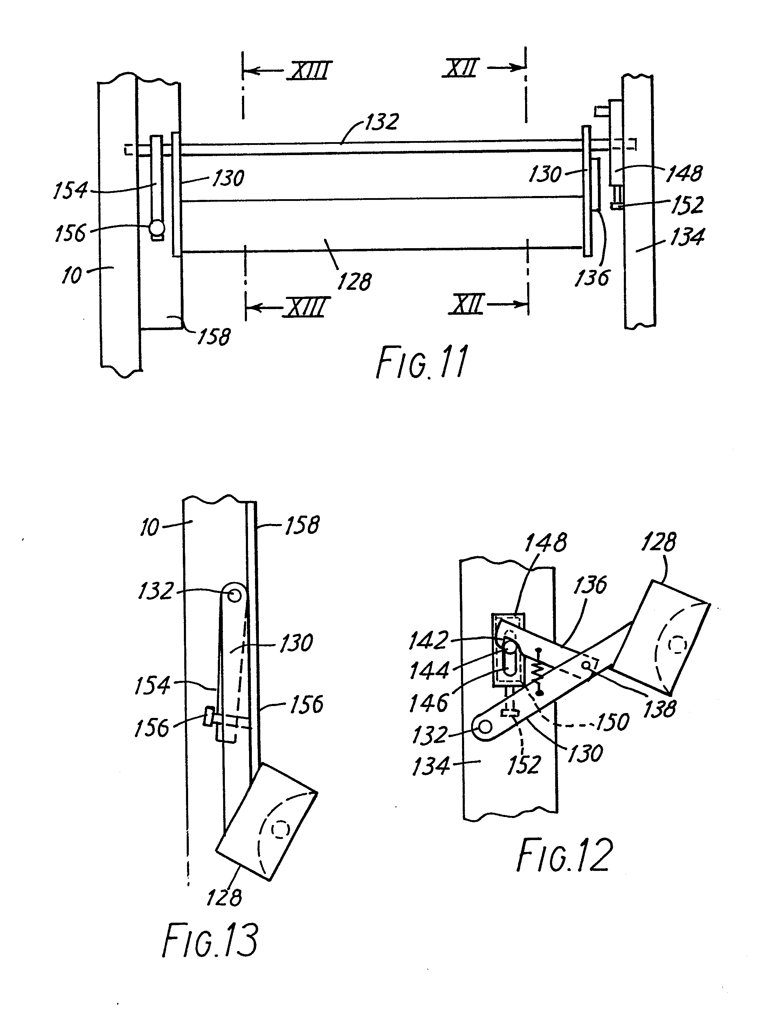

Figs. 9 and 10 are schematic plan and sectional views respectively of the lens carriage 16. The carriage 16 comprises a main subframe 104 which runs on the rails 12 as described previously. On top of this is a lens support plate 106 which holds the lens 108 itself. The lens support plate is not rigidly secured to the subframe 104, but is located loosely by bolts or

-13-

pins 110 in enlarged holes 112. At the front of the lens carriage, the support plate 106 has a depending front panel 114, bearing scales and other indicia relating to the operation of lens and flash control levers 116 for the lens 108. In addition, there are two dials 118, one at each side. Behind these are threaded bolts 120, which co-operate with nuts 122 fixed to the subframe 104. Compression springs 124 bias the front panel 114 away from the subframe 104. By turning both dials 118 together, the lens can be moved slightly forwards and backwards relative to the subframe. By turning one dial and not the other, or by turning the dials in opposite senses, the lens support plate can be moved arcuately in the horizontal plane to a slightly twisted position. These movements of the lens are useful for special decorative effects.

My European patent application No. 0033593 describes illuminating the copy table 22 by means of light reflected from mirrors which are concave in both horizontal and vertical directions, in order to achieve a non-uniform distribution of light on the copy table. The present camera uses the same arrangement of mirrors, shown at 126 in Fig. 1 on either side of the camera. (Naturally, they are enclosed by an outer casing, which is not shown).

However, I have developed an improvement or modification of this arrangement. Instead of using

-14-

fixed lights, my lights 128 are on support brackets 130 which are pivoted to the frame, about a horizontal spindle 132. These arrangements are seen in more detail in Figs. 11, 12 and 13.

The purpose of this improvement is to allow the lights 128 to be swung down from the normal position shown in Fig. 1 (where they reflect light to the copy table 22 by means of the mirrors 126) to a position shown in dotted lines in Fig. 1, where they are closer to the copy table 22 and illuminate it directly. In the latter position, the central area of the copy table will be well illuminated, although the edge and corner areas will not. This position is particularly useful for work which involves only small copy items in the central area. Since the illumination is much greater with the lights swung closer, the exposure time is greatly reduced, and so the throughput of work is much improved. For example, the exposure time may be reduced from 100 seconds to 20 seconds in a typical case, so clearly many more copy items can be processed in a given time.

Referring to Figs. 11 and 12, the spindle 132 runs from the frame 10 at the rear of the camera to a frame member 134 at the front. The support brackets 130 are secured to pivot with the spindle 132. At the front end, there is a hook arm 136 pivoted to the bracket 130 at an intermediate point 138, and biassed downwards by a spring 140 between them. The hooked end 142 of the arm 136 engages a pin 144 above the bracket 130, under the action of the spring, in order to hold the lights in the normal position. The pin 144 projects through a slot 146 in a housing 148 mounted to the frame member 134, and is mounted on a plate 150 which slides vertically in the housing 148. A screw 152 adjusts the position of the plate 150 in the housing, and hence the vertical position of the pin 144. This enables the correct position of the lamps 128 to be preset, and the hooked arm 136 can be easily engaged and disengaged when it is desired to swing the lights between the normal position and the lowered position.

At the rear end of the spindle 132 (see Figs. 11 and 13), behind the support bracket 130, there is a stop member 154 which is fixed to rotate with the spindle. This has a screw 156 through it, which abuts against a backstop plate 158 of the frame 10 when the brackets 130 are swung down to put the lights in the lowered position. The screw 156 can be preset so that the lights automatically come to rest in the required position when they are swung down to illuminate the central area of the copy table.

-16-

CLAIMS:

1. A camera comprising a copyholder (22), a holder (14) for photographic material, and a lens (108), the lens (108) being arranged above the copyholder (22) and the holder (14) for photographic material being arranged above the lens, wherein there is provided means (28-40) for moving the lens vertically in order to adjust the magnification of an image of copy in the copyholder (22) projected by the lens (108) onto the holder (14) for photographic material, and means (24,26) for simultaneously moving the holder (14) for photographic material vertically in a manner to keep the projected image in focus, the holder (14) for photographic material being at its lowest position when the lens (108) is arranged to provide 100% magnification of the image, the holder (14) for photographic material being raised from its lowest position when the lens is arranged to provide magnifications greater or less than 100%.

2. A camera according to claim 1 wherein the means for moving the holder (14) for photographic material comprises a rotatable crank (24), and a connecting rod (26) which is pivoted at one end thereof to the crank and at the other end thereof to the holder (14) for photographic material.

3. A camera according to claim 2 wherein the connecting rod (26) comprises two parts (44,46) which normally bear against each other but which can separate should the holder (14) for photographic material jam as it is lowered.

4. A camera according to any one of the preceding claims, wherein the holder (14) for photographic material is supported by a mechanical stop (50) when in said lowest position, the stop (50) being separate from the means (24,26) for moving the holder (14).

5. A camera according to claim 4, wherein the mechanical stop (50) is adjustable.

6. A camera according to claim 4 or claim 5, having two said stops (50) which are spaced from each other and from the means (24,26) for moving the holder (14) for photographic material, whereby the two stops (50) and said means (24,26) for moving the holder (14) form a three-point support for the holder (14) when it is in said lowest position.

7. A camera according to any one of the preceding claims having means (80) for detecting the distance between the lens (108) and the holder (14) for photographic material, said means being arranged to control an exposure timer (82) which determines the length of time for which said photographic material is to be exposed to said image.

8. A camera according to any one of the preceding claims, having means (56,62) for detecting the presence of an operator's finger or hand beneath the holder (14) for photographic material as it is lowered, and for stopping a drive motor (M) which drives said holder (14)

-18-

when such presence is detected.

9. A camera having a copyholder (22), a holder (14) for photographic material, a lens (108) arranged to project an image of copy in the copyholder (22) onto the holder (14) for photographic material, one or more lights (128), and one or more mirrors (126) arranged to reflect light from said light or lights (128) to the copyholder (22), characterised in that the light or lights (128) are mounted so as to be movable between a first position in which they illuminate the copyholder (22) by reflection in the mirror or mirrors (126), and a second position in which they illuminate the copyholder (22) directly.

10. A camera according to claim 9 wherein the light or lights (128) provide a greater intensity of illumination to a central area of the copyholder (22) when in said second position than when in said first position.

FIG.1

14

20

48

10

16

134

22

FIG.2

56

14

IV         IV

54    52    54        48

FIG.3

FIG.4

FIG.5

FIG.7

FIG.8

FIG.6

FIG.9

FIG.10

0113977

FIG.11

FIG.12

FIG.13